# EUROPÄISCHE PATENTSCHRIFT

(11) **EP 4 484 814 B1**
(45) Veröffentlichungstag und Bekanntmachung des Hinweises auf die Patenterteilung: **11.03.2026**
(21) Anmeldenummer: 23181673.7
(22) Anmeldetag: 27.06.2023
(51) Int. Cl.: F16L 27/11, F16L 27/12, F16L 39/00, F16L 59/065, F16L 59/14, F16L 59/18, F16L 51/02, F16L 51/04, F17C 13/00

(54) **VERBINDUNGSLEITUNG FÜR EIN KRYOFLUID**
CONNECTING CONDUIT FOR A CRYOGENIC FLUID
CONDUIT DE RACCORDEMENT POUR FLUIDE CRYOGÉNIQUE

(43) Veröffentlichungstag der Anmeldung: 01.01.2025
(73) Patentinhaber: SAG Group B.V., 2222 AK Katwijk (NL)
(72) Erfinder: EIBÖCK, Martin, 5760 Saalfelden (AT); OBERTHALER, Klaus, 5603 Kleinarl (AT)
(74) Vertreter: Weiser Voith Gugler Patentanwälte Partnerschaft

(56) Entgegenhaltungen:
- WO-A1-2008/135780
- US-A- 3 068 026
- US-A- 6 094 922
- US-A1- 2023 139 421

## Beschreibung

Die vorliegende Erfindung betrifft eine Verbindungsleitung für ein Kryofluid, mit einem flexiblen Schlauch, der an jedem Ende mit einem Anschlussstutzen versehen ist.

US 3,068,026 und US 2023/0139421 A1 offenbaren Verbindungsleitungen für Kryofluide.

Kryofluide wie verflüssigter Wasserstoff oder verflüssigtes Erdgas (liquefied natural gas, LNG) werden häufig als Kraftstoffe mit hoher Energiedichte für den Betrieb von Fahrzeugen, z.B. LKWs oder Bussen, verwendet. Die Kryofluide werden dabei in Kryotanks gespeichert, die z.B. an beiden Seiten des Fahrzeugs am Chassis montiert werden. Zum einfachen Befüllen solcher Doppeltanks von einer Fahrzeugseite aus werden Verbindungsleitungen zwischen den Tanks bzw. deren Füll- und Entnahmearmaturen benötigt.

Zur Aufrechterhaltung der Tiefsttemperatur der Kryofluide, z.B. etwa -252 °C im Falle von flüssigem Wasserstoff oder etwa -161 °C im Falle von LNG, müssen die Verbindungsleitungen der Komponenten ausgezeichnet wärmeisoliert sein. Dazu werden meist Doppelwandkonstruktionen mit Vakuumisolierung verwendet. Der Einsatz solcher Konstruktionen an einem Fahrzeugchassis stellt jedoch eine zusätzliche Herausforderung dar, denn die Verbindungsleitungen müssen Vibrationen und Verwindungen des Fahrzeugchassis, welche signifikante Lageänderungen der verbundenen Komponenten gegeneinander zur Folge haben, widerstehen können.

Die Erfindung setzt sich zum Ziel, eine Verbindungsleitung für Kryofluide zu schaffen, welche diese Anforderungen erfüllt.

Dieses Ziel wird mit einer Verbindungsleitung für ein Kryofluid erreicht, mit einem flexiblen Schlauch, der an jedem Ende mit einem Anschlussstutzen versehen ist, wobei der Schlauch mit Umfangsspiel in einem starren Rohr liegt, dessen Enden mit je einem der Anschlussstutzen dicht verbunden sind, sodass der Spielraum zwischen Schlauch und Rohr evakuierbar ist, wobei zumindest eine der dichten Verbindungen zwischen Rohrende und Anschlussstutzen über eine Faltenbalgmanschette erfolgt, in deren auseinandergezogener Stellung der Schlauch weniger gekrümmt und in deren zusammengezogener Stellung der Schlauch mehr gekrümmt ist.

Die Verbindungsleitung der Erfindung schafft eine vakuumisolierbare Doppelwandstruktur, welche jedweden Relativbewegungen der angeschlossenen Komponenten und damit auch starken Erschütterungen und Verwindungen eines Fahrzeugs schadlos folgen kann. Damit wird jederzeit eine weitgehende oder sogar vollständige Vakuum-Wärmeisolierung des Kryofluids gewährleistet.

Bevorzugt erfolgt nicht nur eine sondern jede der beiden dichten Verbindungen zwischen jeweiligem Rohrende und jeweiligen Anschlussstutzen über je eine Faltenbalgmanschette. Die Verbindungsleitung kann dadurch an beiden Enden individuell die Relativbewegungen der angeschlossenen Komponenten aufnehmen und so beispielsweise in der Mitte zusätzlich am Fahrzeugchassis fixiert werden.

Besonders günstig ist es, wenn die - zumindest eine - Faltenbalgmanschette aus Metall gefertigt ist, bevorzugt aus Edelstahl. Dies verleiht der Faltenbalgmanschette eine federnde Ruhelage, aus der sie auseinander- und zusammengezogen werden kann, und gleichzeitig hohe Gasdichtigkeit und Bruchdehnung.

In einer bevorzugten Ausführungsform der Erfindung ist der Schlauch mit einem scheuerfesten Mantel versehen, bevorzugt aus Glasfaser. Dies vermeidet eine Abnützung des Schlauches durch Abrieb bei allfälligen Berührungen an der Innenwand des Rohrs, wenn sich der Schlauch beim Zusammenziehen bzw. "Einfedern" der Faltenbalgmanschette einkrümmt. Ein Mantel aus Glasfaser ist besonders tiefsttemperaturbeständig.

Besonders günstig ist es, wenn zwischen Schlauch und Mantel eine Schicht aus thermisch isolierendem Material zwischengelegt ist, insbesondere eine Schicht aus einer mehrlagigen (wärmestrahlungsisolierenden) Aluminiumfolie mit einem wärmeleitungsisolierenden Vlies zwischen den Lagen. Diese Maßnahmen verbessern die Wärmeisolierung der Verbindungsleitung.

Gemäß einem weiteren bevorzugten Merkmal der Erfindung kann in dem Rohr ein Bindemittel für Wasserstoffgas und/oder Restgas angeordnet sein. Insbesondere kann das Bindemittel in einem mit Gaseintritten versehenen Gitterkäfig enthalten sein, der neben dem Schlauch im Rohr verläuft. Allfälliges Restgas und/oder durch den Schlauch ausdiffundierendes Gas, welches mit der Zeit das Vakuum im Zwischenraum zwischen Schlauch und Rohr und somit die Wärmeisolierung beeinträchtigen und zu einer Korrosion des Rohrs führen könnte, wird dadurch gebunden.

In vorteilhafter Weise ist das Rohr aus Metall gefertigt, bevorzugt aus Aluminium, was der Verbindungsleitung hohe Festigkeit bei geringem Gewicht verleiht.

In all diesen Ausführungsformen kann weiters bevorzugt das Rohr an seiner Außenseite mit einer Verankerung zur Montage an einem Fahrzeugchassis ausgestattet sein. Damit können die zwischen den angeschlossenen Komponenten auftretenden Relativbewegungen aufgeteilt werden, u.zw. auf eine erste Relativbewegung zwischen der einen Komponente und dem Rohr und einer zweiten Relativbewegung zwischen dem Rohr und der anderen Komponente.

In einer weiteren vorteilhaften Ausführungsform der Erfindung umfasst jeder Anschlussstutzen einen Innenstutzen und einen diesen mit Abstand umgebenden Außenstutzen, wobei der Innenstutzen mit dem Schlauchende und der Außenstutzen mit dem Rohrende oder dessen Faltenbalgmanschette, falls vorhanden, verbunden ist, und wobei Innen- und Außenstutzen über eine gegenüber ihren freien Enden zurückversetzte Ringstruktur dicht miteinander verbunden sind. Das freie Ende des Innenstutzens kann für den Kryofluidanschluss der jeweiligen Komponente verwendet werden, und das freie Ende des Außenstutzens errichtet gegenüber dem Innenstutzen einen umgebenden ringförmigen Zwischenraum, der z.B. schaumstoffisoliert oder wieder zur Vakuumisolierung verwendet werden kann. Der Außenstutzen kann überdies die Hauptlast der mechanischen Verbindung zur angeschlossenen Komponente übernehmen und so den Innenstutzen, der zur Verbindung des Kryofluids dient, entlasten.

Zur Lastentkopplung zwischen Innen- und Außenstutzen ist es ferner besonders günstig, wenn die Ringstruktur einen Faltenbalgabschnitt enthält. Der Faltenbalgabschnitt kann auch Bewegungen oder Fehlstellungen zwischen Innen- und Außenstutzen ausgleichen, die beim Verbinden des jeweiligen Anschlussstutzens mit der jeweiligen Komponente auftreten können.

Die Erfindung wird nachstehend anhand eines in den beigeschlossenen Zeichnungen dargestellten Ausführungsbeispiels näher erläutert. In den Zeichnungen zeigt
Fig. 1 die Verbindungsleitung der Erfindung in einem perspektivischen Längsschnitt; und
Fig. 2 einen der Anschlussstutzen der Verbindungsleitung von Fig. 1 in einem perspektivischen Längsschnitt vergrößert im Detail.

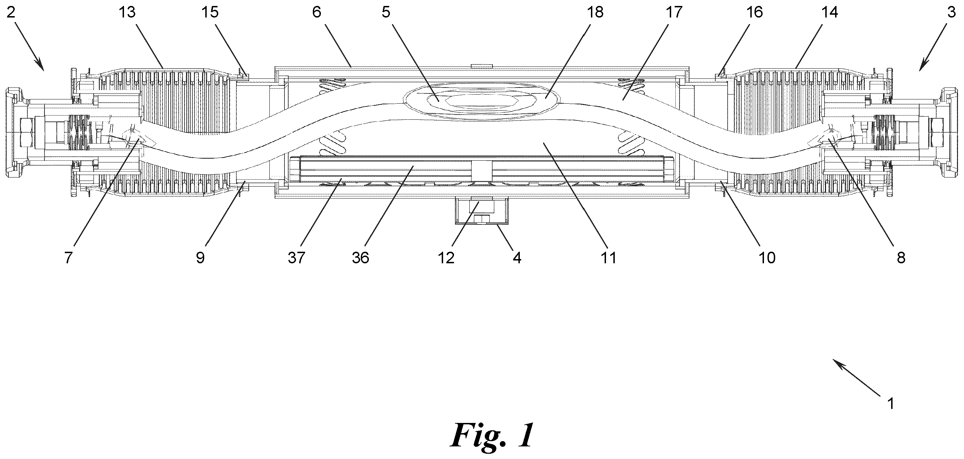

Fig. 1 zeigt eine Verbindungsleitung 1 für ein Kryofluid. Das Kryofluid kann beispielsweise Wasserstoff sein, der bei Temperaturen von etwa -250 °C und einem Druck von bis zu 16 bar - oder mehr, je nach Behälterbauart - zumindest teilweise verflüssigt vorliegt, oder ein vergleichbares, in Verbrennungskraftmaschinen oder Brennstoffzellen einsetzbares Kryofluid, z.B. verflüssigtes Erdgas (liquefied natural gas, LNG) mit einer Temperatur von etwa -161 °C. Das Kryofluid kann aber auch ein Kältemittel sein, beispielsweise Flüssigstickstoff, mit dem das Kühlsystem von Kühllastern betrieben wird, z.B. von Lebensmitteltransportern.

Die Verbindungsleitung 1 hat an ihren beiden Enden jeweils einen Anschlussstutzen 2, 3, mit dem sie dort an eine anzuschließende Komponente, z.B. einen Kraftstofftank, einen Kältemittelbehälter oder eine Armatur zum Befüllen oder Entnehmen von Kryofluid daraus, angeschlossen werden kann. Beispielsweise dient die Verbindungsleitung 1 zum Verbinden zweier an den gegenüberliegenden Seiten eines Lastkraftwagens (LKWs) montierten Wasserstofftanks, um diese gemeinsam von einer Fahrzeugseite her befüllen oder entleeren zu können.

Die Verbindungsleitung 1 wird dabei von den über die Anschlussstutzen 2, 3 angeschlossenen Komponenten mitgetragen. Alternativ oder zusätzlich hat sie an ihrer Außenseite eine Verankerung 4, über welche sie z.B. an einem Fahrzeugchassis befestigt werden kann. Die Verbindungsleitung 1 ist dadurch entweder an zwei Verankerungspunkten, nämlich den angeschlossenen Komponenten, die am Fahrzeugchassis montiert sind, oder an drei Verankerungspunkte, nämlich den beiden angeschlossenen Komponenten und der Verankerung 4, am Fahrzeugchassis fixiert.

Die Verbindungsleitung 1 ist eine evakuierbare Doppelwandkonstruktion aufgebaut aus einer inneren Kryoleitung in Form eines flexiblen Schlauchs 5 und einem diesen mit Umfangsspiel umgebenden starren Rohr 6. Die Enden 7, 8 des Schlauchs 5 sind mit den Enden 9, 10 des Rohrs 6 über jeweils einen der Anschlussstutzen 2, 3 dicht verbunden. Dadurch ist der Spiel- bzw. Zwischenraum 11 zwischen Schlauch 5 und Rohr 6 zwecks thermischer Isolierung des Schlauchs 5 evakuierbar, z.B. über eine verschließbare Evakuierungsöffnung 12 des Rohrs 6.

Zumindest eine der dichten Verbindungen zwischen dem jeweiligen Rohrende 9, 10 und dem jeweiligen Anschlussstutzen 2, 3, hier beide dichte Verbindungen, erfolgt über eine Faltenbalgmanschette 13, 14. Das dem Anschlussstutzen 2 abgewandte Ende 15 der Faltenbalgmanschette 13 ist mit dem Rohrende 9 verbunden, und das dem Anschlussstutzen 3 abgewandte Ende 16 der Faltenbalgmanschette 14 ist mit dem Rohrende 10 verbunden. Wenn nur eine Faltenbalgmanschette z.B. zwischen dem Anschlussstutzen 2 und dem Rohrende 9 verwendet wird, kann das andere Rohrende 10 direkt mit dem anderen Anschlussstutzen 3 dicht verbunden sein.

Das Rohr 6 und die Faltenbalgmanschetten 13, 14 können z.B. aus Kunststoff gefertigt sein. Für Tiefsttemperaturfestigkeit werden sie aus Metall gefertigt, beispielsweise aus Edelstahl oder Aluminium. Die Faltenbalgmanschetten 13, 14 haben dadurch eine federnde Ruhestellung zwischen ihrer auseinandergezogenen und ihrer zusammengezogenen Stellung.

Die Längen des Schlauchs 5, des Rohres 6 und der Faltenbalgmanschetten 13, 14 sind so dimensioniert, dass in einer stärker auseinandergezogenen Stellung einer oder beider Faltenbalgmanschetten 13, 14 der Schlauch 5 weniger stark gekrümmt ist, beispielsweise gestreckt, und in einer zusammengezogenen Stellung einer oder beider Faltenbalgmanschetten 13, 14 der Schlauch 5 stärker gekrümmt ist. Beispielsweise zeigt Fig. 1 die Ruhestellung der Faltenbalgmanschetten 13, 14, in welcher der Schlauch 5 mehrfach gekrümmt durch das Rohr 6 verläuft. Beim Auseinanderziehen einer oder beider Faltenbalgmanschetten 13, 14 kann sich der Schlauch 5 strecken und beim Zusammenziehen einer oder beider Faltenbalgmanschetten 13, 14 stärker krümmen.

Dadurch können Relativbewegungen zwischen den durch die Verbindungsleitung 1 verbundenen Komponenten aufgenommen werden. Wenn die Verankerung 4 als dritter Verankerungspunkt verwendet wird, können die eine Faltenbalgmanschette 13 und der gekrümmte Schlauch 5 Relativbewegungen zwischen der Verankerung 4 und der einen Komponente und die andere Faltenbalgmanschette 14 und der gekrümmte Schlauch 5 Relativbewegungen zwischen der Verankerung 4 und der anderen Komponente ausgleichen.

Der Schlauch 5 ist aus einem flexiblen Material gefertigt, beispielsweise Kunststoff oder biegsamem Metall. Als Scheuerschutz gegenüber der Innenseite des Rohres 6 bei einer zu starken Krümmung des Schlauches 5 ist der Schlauch 5 optional mit einem scheuerfestem Mantel 17 versehen. Der Mantel 17 kann beispielsweise aus einem Gewebe, Gelege, Gewirke oder Vlies von Glasfasern gefertigt sein. Zwischen Schlauch 5 und Mantel 17 ist optional eine Schicht 18 aus einem thermisch isolierenden Material zwischengelegt. Beispielsweise ist die Schicht 18 durch eine wärmestrahlungsisolierende Aluminiumfolie gebildet, die in mehreren Lagen rund um den Schlauch 5 gewickelt wird, wobei ein wärmeleitungsisolierendes Vlies zwischen den Lagen mitgewickelt wird.

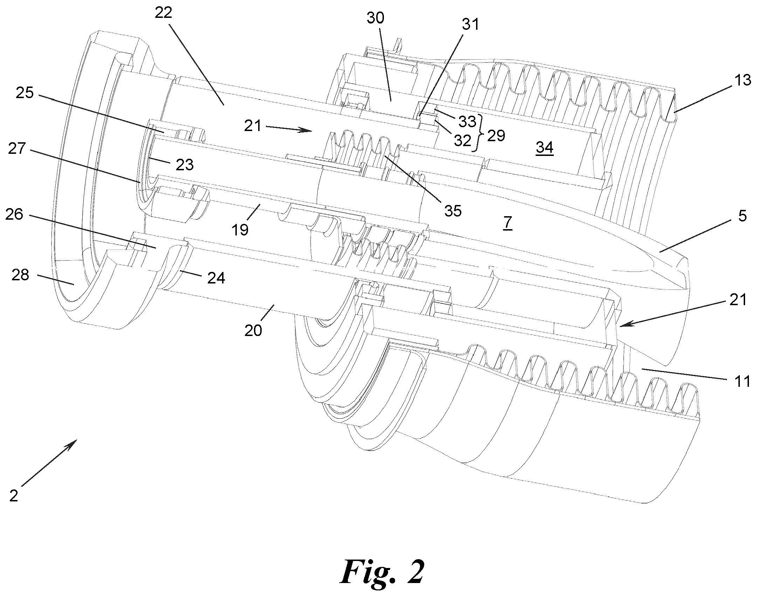

Der Aufbau eines der Anschlussstutzen 2, 3 wird nun anhand von Fig. 2 für den Anschlussstutzen 2 im Detail erläutert. Der Aufbau des Anschlussstutzens 3 ist analog.

Gemäß Fig. 2 umfasst der Anschlussstutzen 2 einen mit dem Schlauchende 7 verbindbaren Innenstutzen 19 sowie einen direkt oder über den Faltenbalgabschnitt 13, falls vorhanden, mit dem Rohrende 9 verbindbaren Außenstutzen 20. Innen- und Außenstutzen 19, 20 sind über eine Ringstruktur 21 miteinander verbunden. Die Ringstruktur 21 kann eine dichte Verbindung zwischen Innenstutzen 19 und Außenstutzen 20 errichten, wodurch der Zwischenraum 11 gesondert wärmeisolierbar, insbesondere evakuierbar ist. Alternativ kann die Ringstruktur 21 gasdurchlässig sein, so dass der Zwischenraum 11 mit dem Ringraum 22 zwischen Innenstutzen 19 und Außenstutzen 20 druckverbunden und mit diesem gemeinsam evakuierbar ist, falls gewünscht.

Die Ringstruktur 21 ist gegenüber den freien Enden 23, 24 von Innen- und Außenstutzen 19, 20 in Richtung auf das Rohr 6 hin zurückversetzt, so dass die Enden 23, 24 für die anzuschließenden Komponenten, z.B. einen Fahrzeugtank oder eine Armatur, frei zugänglich sind. Zu diesem Zweck haben die freien Enden 23, 24 von Innen- und Außenstutzen 19, 20 z.B. jeweils einen Endflansch 25, 26 mit einer Überwurfmutter 27, 28. Damit kann der Innenstutzen 19 z.B. mit einem Kryofluidanschluss und der Außenflansch 20 z.B. mit einem lastaufnehmenden Gewinde, das eine Evakuieröffnung zum Evakuieren des Ringraums 22 hat, verbunden werden.

Um das Herstellen dieser Verbindungen, insbesondere der Verschraubungen mittels der Überwurfmuttern 27, 28, zu erleichtern, kann die Ringstruktur 21 mit dem Außenstutzen 20 optional über eine axialbewegliche Kupplung 29 verbunden sein. Die Kupplung 29 erlaubt eine Ein- und Auswärtsbewegung des Außenstutzens 20 gegenüber der Ringstruktur 21 und dem damit verbundenen Innenstutzen 19, z.B. zum Zurückschieben des Außenstutzens 20 zum Freilegen des Endes 23 des Innenstutzens 19, um den Innenstutzen 19 mit einem Kryofluidanschluss mittels der Überwurfmutter 27 zu verschrauben. Anschließend wird der Außenstutzen 20 wieder vorgeschoben, um den Außenstutzen 20 mittels der Überwurfmutter 28 an der anzuschließenden Komponente zu fixieren.

Die Kupplung 29 umfasst einen Anschlag, der die Auswärtsbewegung des Außenstutzens 20 begrenzt. Dazu hat einer der Teile Außenstutzen 20 und Ringstruktur 21 (hier: die Ringstruktur 21) einen Innenabsatz 30 und der andere der Teile Außenstutzen 20 und Ringstruktur 21 (hier: der Außenstutzen 20) einen daran bei der Auswärtsbewegung des Außenstutzens 20 anschlagenden Außenabsatz 31.

Die Kupplung 29 kann drehbar oder drehfest ausgebildet sein. Bei einer drehfesten Kupplung 29 kann die Rotationslage der Drehfixierung einstellbar sein. Zur Einstellung kann beispielsweise der Außenstutzen 20 einen Außenzahnkranz 32 und die Ringstruktur 21 einen Innenzahnkranz 33 haben (oder umgekehrt), welche Zahnkränze ineinander eingreifen können und so die Drehfixierung der Kupplung 22 erreichen. Durch Einwärtsbewegen des Außenstutzens 20 können die Zahnkränze 32, 33 außer Eingriff gebracht und dann der Außenstutzen 20 gegenüber der Ringstruktur 21 verdreht werden, um eine andere Drehfixierungslage auszuwählen, in der der Außenstutzen 20 beim Auswärtsbewegen wieder drehfest einrastet. Die Ringstruktur 21 kann dazu eine ringförmige Vertiefung 34 haben, in welche der Außenstutzen 20 bei seiner Einwärtsbewegung eintauchen kann.

Wie in Fig. 2 gezeigt, kann die Ringstruktur 21 optional einen Faltenbalgabschnitt 35 haben, um Relativbewegungen zwischen dem Innenstutzen 19 und dem Außenstutzen 20, insbesondere Verkippungen oder Offsets zwischen ihren Längsachsen, auszugleichen. Dies kann nützlich sein, um Toleranzen zwischen einem Kryofluidanschluss, mit dem der Innenstutzen 19 verbunden ist, und einem Evakuier- und Lastanschluss, mit dem der Außenstutzen 20 verbunden ist, oder um allfällige Biegebewegungen des Innenstutzens 19 mit dem Schlauch 5, wenn er sich bewegt, zu kompensieren.

Der in die Ringstruktur 21 integrierte Faltenbalgabschnitt 35 kann beispielsweise - so wie im Übrigen auch die Faltenbalgmanschetten 13, 14 - eine Einhüllende haben, die etwa zylinderförmig ist und koaxial und mit Radialabständen sowohl zum Innenstutzen 19 als auch zum Außenstutzen 20 verläuft.

Die ringförmige Vertiefung 34 der Ringstruktur 21 liegt im gezeigten Beispiel zwischen dem Faltenbalgabschnitt 35 und der Kupplung 29. Der Faltenbalgabschnitt 35 könnte jedoch an anderer Stelle der Ringstruktur 21 liegen, z.B. in der Art einer zickzack gefalteten Ringscheibe.

Im Rohr 6, insbesondere entlang des Schlauches 5, kann ein Bindemittel 36 für Wasserstoffgas angeordnet werden. Das Bindemittel 36 kann beispielsweise in einem mit Gaseintritten versehenen Gitterkäfig 37 enthalten sein, der etwa stab- oder boltzenförmig neben dem Schlauch 5 im Rohr 6 über dessen gesamte Länge verläuft.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verbindungsleitung für ein Kryofluid, mit einem flexiblen Schlauch (5), der an jedem Ende mit einem Anschlussstutzer (2, 3) versehen ist, wobei der Schlauch (5) mit Umfangsspiel in einem starren Rohr (6) liegt, dessen Enden (9, 10) mit je einem der Anschlussstutzen (2, 3) dicht verbunden sind, sodass der Spielraum (11) zwischen Schlauch (5) und Rohr (6) evakuierbar ist, **dadurch gekennzeichnet, dass** zumindest eine der dichten Verbindungen zwischen Rohrende (9, 10) und Anschlussstutzen (2, 3) über eine Faltenbalgmanschette (13, 14) erfolgt, in deren auseinandergezogener Stellung der Schlauch (5) weniger gekrümmt und in deren zusammengezogener Stellung der Schlauch (5) mehr gekrümmt ist.

2. Verbindungsleitung nach Anspruch 1, **dadurch gekennzeichnet, dass** jede der beiden dichten Verbindungen über je eine Faltenbalgmanschette (13, 14) erfolgt.

3. Verbindungsleitung nach Anspruch 1 oder 2, **dadurch gekennzeichnet, dass** die zumindest eine Faltenbalgmanschette (13, 14) aus Metall gefertigt ist, bevorzugt aus Edelstahl.

4. Verbindungsleitung nach einem der Ansprüche 1 bis 3, **dadurch gekennzeichnet, dass** der Schlauch (5) mit einem scheuerfesten Mantel (17) versehen ist, bevorzugt aus Glasfaser.

5. Verbindungsleitung nach Anspruch 4, **dadurch gekennzeichnet, dass** zwischen Schlauch (5) und Mantel (17) eine Schicht (18) aus thermisch isolierendem Material zwischengelegt ist.

6. Verbindungsleitung nach Anspruch 5, **dadurch gekennzeichnet, dass** die Schicht (18) aus einer mehrlagigen Aluminiumfolie mit einem wärmeleitungsisolierenden Vlies zwischen den Lagen gebildet ist.

7. Verbindungsleitung nach einem der Ansprüche 1 bis 6, **dadurch gekennzeichnet, dass** in dem Rohr (6) ein Bindemittel (36) für Wasserstoffgas angeordnet ist.

8. Verbindungsleitung nach Anspruch 7, **dadurch gekennzeichnet, dass** das Bindemittel (36) in einem mit Gaseintritten versehenen Gitterkäfig (37) enthalten ist, der neben dem Schlauch (5) im Rohr (6) verläuft.

9. Verbindungsleitung nach einem der Ansprüche 1 bis 8, **dadurch gekennzeichnet, dass** das Rohr (6) aus Metall gefertigt ist, bevorzugt aus Aluminium.

10. Verbindungsleitung nach einem der Ansprüche 1 bis 9, **dadurch gekennzeichnet, dass** das Rohr (6) an seiner Außenseite mit einer Verankerung (4) zur Montage an einem Fahrzeugchassis ausgestattet ist.

11. Verbindungsleitung nach einem der Ansprüche 1 bis 10, **dadurch gekennzeichnet, dass** jeder Anschlussstutzen (2, 3) einen Innenstutzen (19) und einen diesen mit Abstand umgebenden Außenstutzen (20) umfasst, wobei der Innenstutzen (19) mit dem Schlauchende (7, 8) und der Außenstutzen (20) mit dem Rohrende (9, 10) oder dessen Faltenbalgmanschette (13, 14), falls vorhanden, verbunden ist, und wobei Innen- und Außenstutzen (19, 20) über eine gegenüber ihren freien Enden (23, 24) zurückversetzte Ringstruktur (22) dicht miteinander verbunden sind.

12. Verbindungsleitung nach Anspruch 11, **dadurch gekennzeichnet, dass** die Ringstruktur (22) einen Faltenbalgabschnitt (35) enthält.

## Claims

1. A connecting line for a cryogenic fluid, having a flexible hose (5) which is provided at each end with a connecting piece (2, 3), wherein the hose (5) is positioned with circumferential clearance in a rigid pipe (6), the ends (9, 10) of which are connected in a sealed manner to one of the connecting pieces (2, 3) respectively, such that the clearance space (11) between hose (5) and pipe (6) can be evacuated,
**characterised in that** at least one of the sealed connections between pipe end (9, 10) and connecting piece (2, 3) is made via a bellows sleeve (13, 14), in the extended position of which the hose (5) is less curved and in the contracted position of which the hose (5) is more curved.

2. The connecting line according to claim 1, **characterised in that** each of the two sealed connections is made via a respective bellows sleeve (13, 14).

3. The connecting line according to claim 1 or 2, **characterised in that** the at least one bellows sleeve (13, 14) is made of metal, preferably from stainless steel.

4. The connecting line according to any one of claims 1 to 3, **characterised in that** the hose (5) is provided with a wear-resistant sheath (17), preferably made of glass fibre.

5. The connecting line according to claim 4, **characterised in that** a layer (18) made of thermally insulating material is interposed between hose (5) and sheath (17).

6. The connecting line according to claim 5, **characterised in that** the layer (18) is formed from a multilayer aluminium foil with a thermally insulating fleece between the layers.

7. The connecting line according to any one of claims 1 to 6, **characterised in that** a binder material (36) for hydrogen gas is arranged in the pipe (6).

8. The connecting line according to claim 7, **characterised in that** the binder material (36) is contained in a lattice cage (37) which is provided with gas inlets and runs next to the hose (5) in the pipe (6).

9. The connecting line according to any one of claims 1 to 8, **characterised in that** the pipe (6) is made of metal, preferably of aluminium.

10. The connecting line according to any one of claims 1 to 9, **characterised in that** the pipe (6) is equipped on its outer side with an anchorage (4) for mounting on a vehicle chassis.

11. The connecting line according to any one of claims 1 to 10, **characterised in that** each connecting piece (2, 3) comprises an inner connecting piece (19) and an outer connecting piece (20) surrounding the inner connecting piece with spacing, wherein the inner connecting piece (19) is connected to the hose end (7, 8) and the outer connecting piece (20) is connected to the pipe end (9, 10) or its bellows sleeve (13, 14), if present, and wherein the inner and outer connecting pieces (19, 20) are connected to one another in a sealed manner via an annular structure (22) backwardly offset in relation to their free ends (23, 24).

12. The connecting line according to claim 11, **characterised in that** the annular structure (22) contains a bellows section (35).

## Revendications

1. Conduit de raccordement pour un fluide cryogénique, comprenant un tuyau (5) flexible qui est muni à chaque extrémité d'un raccord de connexion (2, 3), dans lequel le tuyau (5) repose avec un jeu circonférentiel dans un tube (6) rigide dont les extrémités (9, 10) sont reliées de manière étanche à respectivement l'un des raccords de connexion (2, 3), de sorte que l'espace de jeu (11) entre le tuyau (5) et le tube (6) puisse être évacué,
**caractérisé en ce qu'**au moins une des liaisons étanches entre l'extrémité de tube (9, 10) et le raccord de connexion (2, 3) est réalisé par le biais d'un manchon à soufflet plissé (13, 14), dans la position dépliée duquel le tuyau (5) est moins incurvé et dans la position repliée duquel le tuyau (5) est plus incurvé.

2. Conduit de raccordement selon la revendication 1, **caractérisé en ce que** chacune des deux liaisons étanches est réalisé par le biais d'un manchons à soufflet plissé (13, 14).

3. Conduit de raccordement selon la revendication 1 ou 2, **caractérisé en ce que** l'au moins un manchon à soufflet plissé (13, 14) est fabriqué en métal, de préférence en acier inoxydable.

4. Conduit de raccordement selon l'une des revendications 1 à 3, **caractérisé en ce que** le tuyau (5) est pourvu d'une gaine (17) résistante à l'abrasion, de préférence en fibre de verre.

5. Conduit de raccordement selon la revendication 4, **caractérisé en ce qu'**une couche (18) en matériau thermiquement isolant est intercalée entre le tuyau (5) et la gaine (17).

6. Conduit de raccordement selon la revendication 5, **caractérisé en ce que** la couche (18) est formée d'une feuille d'aluminium multicouche ayant un non-tissé thermiquement isolant entre les couches.

7. Conduit de raccordement selon l'une des revendications 1 à 6, **caractérisé en ce qu'**un liant (36) pour l'hydrogène gazeux est disposé dans le tube (6).

8. Conduit de raccordement selon la revendication 7, **caractérisé en ce que** le liant (36) est contenu dans un cage en treillis (37) qui est pourvu d'entrées de gaz et qui s'étend à côté du tuyau (5) dans le tube (6).

9. Conduit de raccordement selon l'une des revendications 1 à 8, **caractérisé en ce que** le tube (6) est fabriqué en métal, de préférence en aluminium.

10. Conduit de raccordement selon l'une des revendications 1 à 9, **caractérisé en ce que** le tube (6) est équipé sur son côté extérieur d'un ancrage (4) pour le montage sur un châssis de véhicule.

11. Conduit de raccordement selon l'une des revendications 1 à 10, **caractérisé en ce que** chaque raccord de connexion (2, 3) comprend un raccord intérieur (19) et un raccord extérieur (20) entourant le raccord intérieur avec un espace, dans lequel le raccord intérieur (19) est relié à l'extrémité de tuyau (7, 8) et le raccord extérieur (20) est relié à l'extrémité de tube (9, 10) ou à son manchon à soufflet plissé (13, 14) dans le cas où il est présent, et dans lequel les raccords intérieur et extérieur (19, 20) sont reliés l'un à autre de manière étanche par le biais d'une structure annulaire (22) décalée vers l'arrière par rapport à leurs extrémités (23, 24) libres.

12. Conduit de raccordement selon la revendication 11, **caractérisé en ce que** la structure annulaire (22) contient une section à soufflet plissé (35).
